Europäisches Patentamt

(19) European Patent Office

Office européen des brevets

(11) Publication number: **0 003 994**

**B1**

(12) **EUROPEAN PATENT SPECIFICATION**

(45) Date of publication of patent specification: **21.10.81**

(51) Int. Cl.³: **E 05 B 65/12, B 60 R 25/02**

(21) Application number: **79100509.3**

(22) Date of filing: **21.02.79**

(54) Lock, especially for a vehicle steering column.

(30) Priority: **08.03.78 GB 915678**

(43) Date of publication of application:
**19.09.79 Bulletin 79/19**

(45) Publication of the grant of the European patent:
**21.10.81 Bulletin 81/42**

(84) Designated Contracting States:
**DE FR GB**

(56) References cited:
**AU - B - 442 857**
**DE - A - 2 323 387**
**DE - B - 1 938 921**
**DE - U - 7 044 466**
**FR - A - 2 102 611**
**FR - A - 2 131 688**
**FR - E - 83807/1 340 826**

(73) Proprietor: **L & F WILLENHALL LIMITED**
**Church Street**
**Willenhall West Midlands WV 13 1QW (GB)**

(72) Inventor: **Harper, Barrie Samuel**
**27, Stubby Lane**
**Wednesfield West Midlands (GB)**

(74) Representative: **Lewis, Samuel Hewitt et al,**
**Forrester & Boehmert Widenmayerstrasse 4/I**
**D-8000 München 22 (DE)**

Courier Press, Leamington Spa, England.

## Lock, especially for a vehicle steering column.

This invention relates to a lock of the kind comprising a body, a bolt which is movable relative to the body between locking and releasing positions, in the former of which positions the bolt projects from the body to engage with a member, the movement of which is to be restricted or prevented by the lock, and in the latter of which positions the bolt is withdrawn from said member, a key-operated lock mechanism for moving the bolt between the locking position and the releasing position, the lock mechanism including a barrel having a key-receiving slot with an open end at a face of the barrel called herein the front face and the barrel being rotatable relative to the body when the proper key is present in the key-receiving slot, and the lock further comprising a retaining element which moves with the bolt between the locking and releasing positions, the barrel having at its end remote from its front face retaining means engageable with the retaining element to hold the bolt temporarily in its releasing position.

In French Patent Specification 2,131,688 there is described a lock of the kind referred to in which the retaining means is in the form of a flange projecting radially outwardly from the barrel and in which the retaining element is a pawl pivotally mounted on a part of the bolt which lies beside the barrel and urged by a spring towards the flange of the barrel. When the bolt is moved into its releasing position, the pawl is moved by its spring into overlapping relation with a forwardly facing surface of the flange and the flange then obstructs movement of the bolt to its locking position. When the key is withdrawn from the lock, a tumbler is moved radially outwardly of the barrel by the key and this tumbler rocks the pawl until it no longer overlaps with the forwardly facing surface of the flange. The pawl can then move past the periphery of the flange and the bolt moves to its locking position.

The arrangement described in the aforesaid French Specification is not entirely satisfactory. When the bolt is in its releasing position, the pawl is urged against the forwardly facing surface of the flange by a spring which is intended to move the bolt to its locking position. This is a fairly strong spring. Rocking of the pawl away from the barrel is opposed by considerable friction between the pawl and the flange. Rocking of the pawl away from the barrel is further opposed by the spring associated with the pawl. The pawl tends to hold the tumbler in the barrel and the camming action of the key then tends to jam the tumbler in the barrel. It is necessary to apply, by means of the key, a large force to the tumbler to bring about the required rocking of the pawl and withdrawal of the key from the barrel is therefore difficult.

In order to minimise wear of the tumblers, it is usual to form the key of a fairly soft material. During withdrawal of the key, the key is in rubbing contact under high pressure with the tumbler which is required to rock the pawl away from the barrel. Because the key is required to exert a large force on the tumbler, excessive wear of the key is likely to occur. This leads to decreased ability of the key to cause the tumbler to project from the barrel and gives rise to a risk that the key may be withdrawn whilst the pawl remains in engagement with the forwardly facing surface of the flange, thereby holding the bolt in its releasing position.

According to the present invention, the retaining means of a lock of the kind referred to defines a recess into which the retaining element enters when the bolt moves to its locking position. The provision of this recess avoids the necessity for the retaining element to be pushed away from the barrel beyond the periphery of the retaining means during withdrawal of the key.

A further disadvantage of the lock described in French Specification 2,131,688 is that the pawl and its spring occupy a fairly large space at one side of the barrel. A consequence of this is that the transverse dimensions of the lock are fairly large and this makes it difficult to incorporate the lock in some apparatus which is required to be controlled by a lock of the kind referred to. In a lock in accordance with the present invention, the entire retaining element, when disposed in the recess of the retaining means, preferably lies nearer to an axis of rotation of the barrel than does a radially outer part of the retaining means. With this arrangement, the retaining element does not extend further from the barrel than does the retaining means and the cross-sectional dimensions of the lock can be smaller than the corresponding dimensions of the lock described in the aforesaid French Specification.

A lock in accordance with the present invention preferably includes also a key-detecting element mounted in the barrel for movement relative thereto into and out of the key-receiving slot and an abutment mounted on the bolt for rocking relative to the bolt towards and away from the key-receiving slot about a rocking axis, the arrangement being such that, when the key-detecting element is out of the key-receiving slot, it projects radially from the barrel into the path of the abutment on the bolt to obstruct movement of the bolt from the releasing position into the locking position until the key is withdrawn and the key-detecting element is permitted to move into the key-receiving slot, the abutment being constrained to move with the bolt between the locking and releasing positions and being movable relative to the bolt in a direction away from the key-receiving slot, the rocking axis of the abutment being spaced, in all positions of the bolt, in the same general direction from a face of the key-detecting element which is engaged by the abutment when the key-detecting element obstructs movement of the bolt from the releasing position. With this arrangement, the bolt is retained in its releasing position even when the retaining element is aligned with the recess in the retaining means until the key is withdrawn, without reinsertion of the key being obstructed in the event that the bolt is prevented from moving fully into its locking position, thereby arresting the abutment in a position where it will be engaged by the key-detecting element when that element is expelled from the key-receiving slot by insertion of the key. The key-detecting element is able to rock the abutment away from the key-receiving slot to permit insertion of the key.

An example of a lock embodying the invention will now be described, with reference to the accompanying drawings wherein:—

FIGURE 1 shows a lock and parts of an associated steering column, certain parts of the lock and certain parts of the steering column being shown in cross section in a plane containing an axis of rotation of a barrel of the lock and a bolt of the lock being shown in a locking position,

FIGURE 2 shows a cross section on the line II—II of Figure 1,

FIGURE 3 is a cross section on the line III—III of Figure 2 but showing the bolt in a releasing position,

FIGURE 4 is a fragmentary view on the arrow IV of Figure 3, certain parts being broken away to reveal internal parts of the lock, and

FIGURE 5 is a view similar to Figure 3 showing parts of the lock in positions occupied during insertion of the key under certain conditions.

The lock shown in the drawing is intended for use as a steering column lock of a motor vehicle and includes a key-operated lock mechanism which controls movement of a bolt that is normally engaged to restrain turning of the steering column. Insertion of an appropriate key into the lock mechanism followed by rotation of the key from its insertion position withdraws the bolt to release the steering column for turning and also turns a multi-position electrical switch from its normal OFF setting. The electrical switch has a series of four distinct ON-settings for enabling electrical supply selectively to accessories and the ignition and starting circuits of the vehicle in successive steps as the key is turned further from its insertion position. The bolt is restrained positively from re-engagement as long as the key is turned away from its insertion position and also even when the key is returned to that position to set the switch OFF again; once the key has been turned from its insertion position to withdraw the bolt, the bolt is prevented from re-engagement to lock the steering column again, until withdrawal of the key from the lock mechanism after its return to the insertion position.

Referring to the drawings, the steering-column shaft 10 of the vehicle has a casing 11 that is rigidly secured to the vehicle structure. Although not shown in the drawing, there is rigidly secured to the casing 11 a housing for containing the lock and to which the lock is releasably secured by one or more bolts 12. Within the housing, there is an aperture in the casing 11 into which the lock extends.

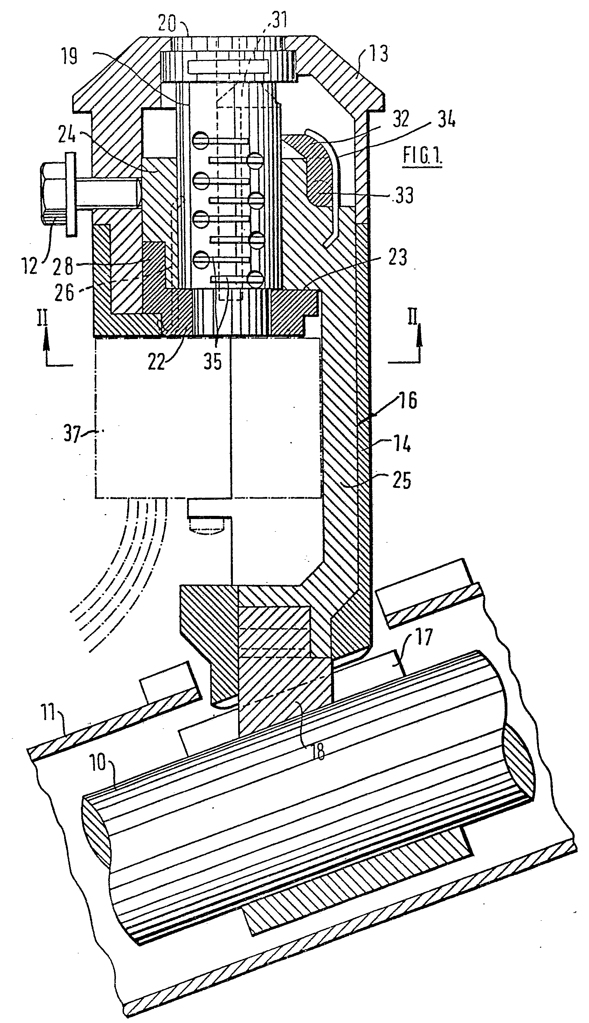

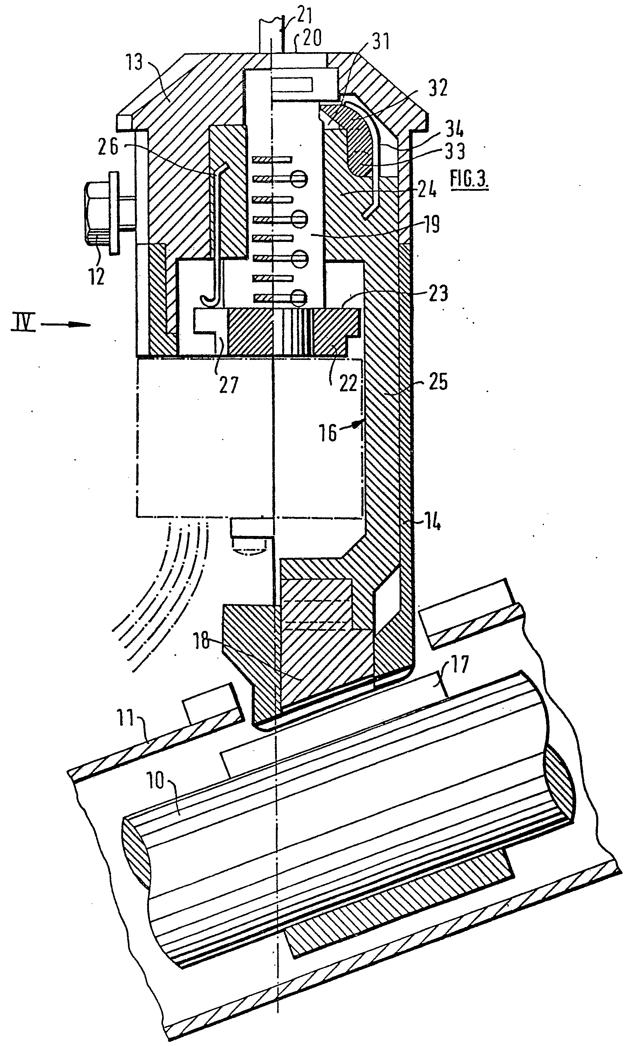

The lock comprises a body formed in two parts, a front part 13 and a rear part 14 which overlap and are secured together by screws (not shown). It will be understood that these screws are concealed within the housing when the lock is in use. The body parts collectively define a line of movement or guideway along which a bolt 16 can move relative to the body between a locking position shown in Figure 1 and a releasing position shown in Figure 3. On the shaft 10 of the steering column there is secured a bush 17 formed with circumferentially spaced slots into one of which a nose 18 of the bolt projects when the bolt is in the locking position.

The key-operated mechanism of the lock includes a barrel 19 having an open slot at its front face 20 for receiving the key 12 (Figure 3) appropriate to the lock. When the key 21 is inserted into the slot, the barrel 19 is rotatable with the key throughout an angle of 120° relative to the body.

At an end of the barrel 19 remote from the front face 20 thereof, there is provided driving means for driving the bolt from its locking position to its releasing position upon rotation of the key and barrel approximately 45° from the insertion position of the key and retaining means for retaining the bolt in its releasing position whilst the key is turned away from its insertion position. The driving means and retaining means are comprised by a member 22 interposed between the barrel and the rear body part 14. The member 22 is keyed to the barrel for rotation therewith. Alternatively, the member may be integral with the barrel.

The member 22 is engaged with both the rear body part 14 and the barrel 19 so that rearward movement of the member 22 and barrel is prevented by the rear body part. Forward movement of the barrel is prevented by engagement between a flange of the barrel and the front body part 13.

The bolt 16 includes a sleeve portion 24 which embraces a middle part of the barrel 19 and is integral with a connecting portion 25 of the bolt which is offset to one side of the longitudinal axis of the barrel. The nose 18 of the bolt is a structurally separate part carried by the connecting portion 25.

The member 25 projects outwardly beyond the periphery of the barrel 19 to present towards the front of the lock a flat part-annular face 23 which constitutes the retaining means.

An element 26 is secured to the sleeve portion 24 of the bolt so as to move with the bolt between the locking and releasing positions. When the bolt is in its releasing position with the barrel turned by the key away from the key insertion position, return of the bolt to the locking position is restrained by abutment of the element 26 on the face 23.

The element 26 is an elongate leaf spring, one end of which is embedded in the sleeve portion 24 of the bolt. The opposite end is bent back on itself to facilitate contact in abutment and sliding with the face 23. The spring 26 extends generally parallel to the longitudinal axis of the barrel and the line of movement of the bolt, and in this way can be readily accommodated within the compass of the lock without the need for increase in diameter. Although the bent-back end portion of the spring 26 can be deflected laterally it normally lies, even when contacting the face 23, close to the barrel 19.

An aperture 27 opens through the member 22 from the face 23. The aperture 27 is sufficiently large to accommodate the bent-back end of the leaf spring 26, and the spring 26 is aligned with the aperture when the barrel 19 is turned back to the key-insertion position, ready for entry into the aperture upon withdrawal of the key. The sides of the aperture are inclined at an acute angle to a radius of the barrel, so that while the end portion of the spring is disposed in the aperture, rotation of the barrel can be made against the resilience of the spring to drive the bent-back end out of the aperture onto a peripheral face of the member.

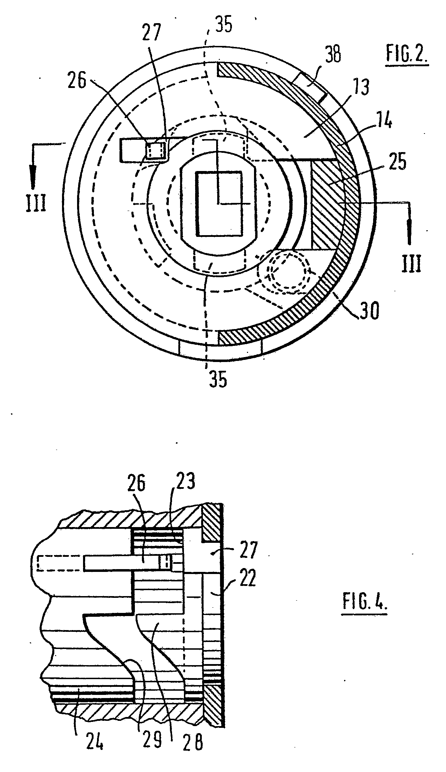

The driving means of the member 22 is a cam 28 which co-operates with a cam surface 29 (Figure 4) on the sleeve portion 24 of the bolt for withdrawing the bolt from the locking position to the releasing position against the action of a spring 30 (Figure 2) located between the bolt and the front body part 13. Rotation of the barrel through 60° following insertion and turning of the key from its insertion position, causes the cam surface 29 to ride up the cam 28 so as to lift the bolt fully to its releasing position and draw the spring 26 from engagement with the peripheral face of the member 22 into engagement with the face 23. Abutment of the spring 26 with the face 23 precludes return of the bolt to the locking position until the key has been turned back to its insertion position so as thereby to bring the spring 26 into alignment once again with the aperture 27.

The bolt continues to be held in its releasing position when the key has been turned back to its insertion position and until the key is withdrawn, by a key-detecting element in the form of a slider 31. The slider is mounted in a slot which extends laterally into the barrel 19 from the key-receiving slot. The length of the slider is such that when it does not obstruct the key-receiving slot it projects radially from the barrel into the path of an abutment 32 on the bolt 16.

The abutment is in the form of a pawl which can rock relative to the bolt about a transverse pivot 33. A leaf spring 34 is provided for urging the free end of the pawl towards the barrel 19. The leaf spring may also, as in this case, retain the pawl in assembled relation with the bolt.

When the bolt 16 is in the locking position, the pawl 32 lies to the rear of the slider 31 and does not impede radially outward movement of the slider so that the slider is free to move out of the key-receiving slot either before or during insertion of the key. Prior to insertion of the key, end portions of tumblers 35 project from the barrel 19 into recesses formed in the sleeve portion 24 of the bolt and thereby constrain the barrel against rotation. Insertion of the proper key into the barrel withdraws the tumblers from the bolt and so frees the barrel for rotation. It will be understood that the slider 31 moves with the barrel and so does not obstruct movement of the pawl 32 and bolt into the releasing position.

When the key is turned back towards its insertion position, rotation of the barrel 19 moves the cam 28 clear of the cam surface 29 since the sleeve portion 24 of the bolt is at this time restrained from axial movement by abutment of the spring 26 on the face 23. On completion of the return rotation the spring 26 moves out of abutment with the face 23 into alignment with the aperture 27. However at this time the slider 31 is aligned with and engages the pawl 32 trapping it against the underside of the front body part 13 and thereby obstructing movement of the bolt into the locking position. Whilst the key remains in the key-receiving slot, the slider cannot move out of the path of the pawl. When the key is withdrawn, the camming action of co-operating inclined faces on the spring-urged pawl and slider cause the slider to move into the key-receiving slot and out of the path of the pawl. This frees the bolt from movement towards the locking position.

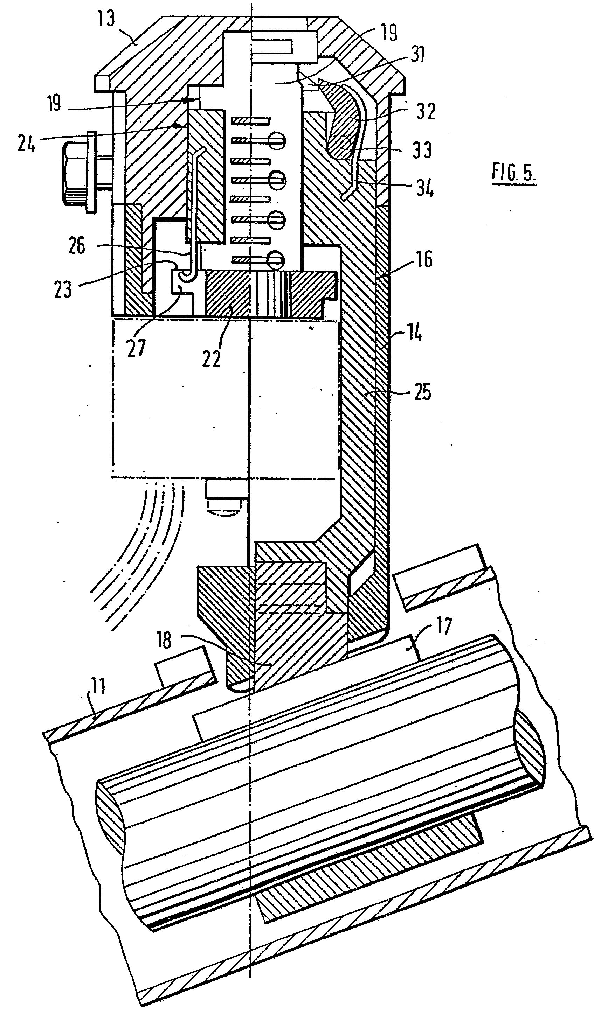

If the nose 18 of the bolt is aligned with one of the slots in the bush 17, the bolt will move completely into the locking position illustrated in Figure 1. If the nose is not completely aligned with a slot in the bush, the nose will come to rest against the periphery of the bush as shown in Figure 5 and the bolt will be held in an intermediate position between the locking and releasing positions. With the bolt in its intermediate position, the pawl 32 lies in the path of the slider 31 and will hold the slider in the key-receiving slot until an attempt is made to insert the key once more. Such insertion is possible only because the pawl 32 is able in this position to rock away from the barrel and so permit the slider to move out of the key-receiving slot, as shown in Figure 5. Once the barrel is rotated, the slider moves angularly away from the pawl and the pawl returns under the action of its spring 34 to its normal position illustrated in Figure 1.

The multi-position electrical switch of the lock is represented, in chain-dotted outline 37, in Figure 1 only of the drawings. The switch is mounted within the lock housing and is coupled to the barrel 19 so as to be switched stepwise from one to the other of its four ON-settings with rotation of the barrel 19 by the key through the full 120° of rotation.

For preventing unauthorised removal of the lock from the housing, there is provided in the front body part 13 a plunger 38 (Figure 2) which normally projects from the lock body into an aperture in the housing. The plunger can be moved radially inwards so as to withdraw from the aperture in the housing only when the bolt 16 is in the releasing position. When the bolt is in the locking position, the sleeve portion 24 of the bolt obstructs the radially inward movement of the plunger. A recess (not shown) in the sleeve portion is moved into alignment with the plunger when the bolt is moved into the releasing position so as thereby to allow removal of the lock in this position only.

The leaf spring 26 is formed of steel. In a case where the member 22 is formed of a relatively soft material, for example a zinc-based die casting alloy, excessive wear of the member 22 may be caused during the working life of the lock by the leaf spring. To reduce wear of the member 22, the element 26 may be formed partly or entirely of a material other than spring steel. Such other material would engage the member 22 and would be selected to reduce wear of this member. In one modified arrangement (not illustrated) the element 26 is formed of a zinc-based die casting alloy, is of elongate form and is so arranged that an end adjacent to the member 22 can undergo limited movement towards and away from the axis of rotation of the barrel 19, the element rocking on a fulcrum at the other end of the element about an axis transverse to the axis of rotation of the barrel. With the element there is associated a leaf spring which urges the element towards the axis of rotation of the barrel. The arrangement is similar to that of the pawl 32 and leaf spring 34.

## Claims

1. A lock comprising a body (13, 14), a bolt (16) which is movable relative to the body between locking and releasing positions, in the former of which positions the bolt projects from the body to engage with a member (10), the movement of which is to be restricted or prevented by the lock, and in the latter of which positions the bolt is withdrawn from said member, a key-operated lock mechanism for moving the bolt between the locking position and the releasing position, the lock mechanism including a barrel (19) having a key-receiving slot with an open end at a front face (20) of the barrel and the barrel being rotatable relative to the body about an axis when the proper key (21) is present in the key-receiving slot and a retaining element (26) which moves with the bolt (16) between the locking and releasing positions, the barrel (19) having at its end remote from its front face (20) retaining means (23) engageable with said retaining element (26) to hold the bolt temporarily in its releasing position, characterised in that the retaining means (23) defines a recess (27) into which the retaining element (26) enters when the bolt (16) moves to its locking position.

2. A lock according to Claim 1 further characterised in that the boundary surface of the recess (27) and the retaining element (26) are adapted to co-operate in a manner such that the retaining element (26) is expelled from the recess when the barrel (19) is rotated about the axis to move the bolt from its locking position.

3. A lock according to Claim 2 further characterised in that the recess (27) opens onto a peripheral face of the retaining means (23) and the boundary surface of the recess extends from the peripheral face at an acute angle to a radius of the barrel.

4. A lock according to any preceding claim further characterised in that, when the retaining element (26) is disposed in the recess (27), the entire retaining element lies nearer to the axis of the barrel (19) than does a radially outer part of the retaining means.

5. A lock according to any preceding claim further characterised in that the retaining element (26) is an elongate element having one end rigidly anchored with respect to the bolt (16) and another end engageable with said retaining means (23) on the barrel, said other end of the retaining element being movable towards and away from the axis of rotation of the barrel.

6. A lock according to Claim 5 further characterised in that the retaining element (26) is a leaf spring.

7. A lock according to any preceding claim further characterised in that the bolt (16) includes a sleeve portion (24) which surrounds the barrel (19) and is formed with recesses to receive end portions of tumblers (35) which project from the barrel when the key is absent and in that the retaining element (26) is secured to the sleeve portion of the bolt.

8. A lock according to any preceding claim further characterised by a key detecting element (31) mounted in the barrel (19) for movement relative thereto into and out of the key-receiving slot and an abutment (32) mounted on the bolt (16) for rocking relative to the bolt towards and away from the key-receiving slot about a rocking axis, the arrangement being such that, when the key-detecting element (31) is out of the key-receiving slot, it projects radially from the barrel (19) into the path of the abutment (32) on the bolt to obstruct movement of the bolt from the releasing position into the locking position until the key is withdrawn and the key-detecting element (31) is permitted to move into the key-receiving slot, the abutment (32) being constrained to move with the bolt between the locking and releasing positions and being movable relative to the bolt in a direction away from the key-receiving slot, and being further characterised in that, in all positions of the bolt (16) the rocking axis of the abutment (32) is spaced in the same general direction from a face of the key-detecting element (31) which is engaged by the abutment when the key-detecting element obstructs movement of the bolt from the releasing position.

9. A lock according to Claim 8 further characterised by a spring (34) for urging the abutment (32) towards the key-receiving slot and by means (13) operative when the bolt (16) is in its releasing position for positively preventing movement of the abutment (32) away from the key-receiving slot sufficiently to enable the abutment to move past the key-detecting element (31) whilst the key is fully inserted into the key-receiving slot, the abutment (32) being movable away from the key-receiving slot when the bolt is in its locking position and when the bolt is in an intermediate position.

**Patentansprüche**

1. Schloß, mit einem Körper (13, 14), einem relativ zum Körper zwischen einer Schließ- und einer Offenstellung bewegbaren Bolzen (16), der in der Schließstellung von dem Körper vorsteht und sich in Eingriff mit einem Teil (10) befindet, dessen Bewegung mittels des Schlosses begrenzt oder verhindert werden soll, während der Bolzen in der Offenstellung aus dem Teil zurückgezogen ist, mit einem schlüsselbetätigten Verriegelungsmechanismus zum Bewegen des Bolzens zwischen der Schließ- und der Offenstellung mit einem Zylinder (19), dessen den Schlüssel aufnehmender Schlitz an einer Vorderfläche (20) des Zylinders offen ist, wobei der Zylinder bei Vorhandensein eines geeigneten Schlüssels (21) im schlüsselaufnehmenden Schlitz relativ zum Körper um eine Achse drehbar ist, und mit einem Halteelement (26), das sich mit dem Bolzen (16) zwischen der Schließ- und der Offenstellung bewegt, wobei der Zylinder (19) an seinem von der Vorderfläche (20) entfernten Abschnitt Halteeinrichtungen (23) aufweist, die mit dem Halteelement (26) in Eingriff bringbar sind, um den Bolzen zeitweise in der Offenstellung zu halten, dadurch gekennzeichnet, daß die Halteeinrichtungen (23) eine Ausnehmung (27) bilden, in die (Ausnehmung) das Halteelement (26) bei Bewegung des Bolzens (16) in die Schließstellung eingreift.

2. Schloß nach Anspruch 1, dadurch gekennzeichnet, daß die Grenzfläche der Ausnehmung (27) und des Halteelementes (26) derart zusammenwirken, daß das Halteelement (26) bei Drehung des Zylinders (19) um die Achse aus der Ausnehmung herausgestoßen wird, um den Bolzen aus der Schließstellung zu bewegen.

3. Schloß nach Anspruch 2, dadurch gekennzeichnet, daß sich die Ausnehmung (27) in Richtung auf eine Umfangfläche der Halteeinrichtungen (23) öffnet und daß sich die Grenzfläche der Ausnehmung von der Umfangfläche unter einen spitzen Winkel zum Radius des Zylinders erstreckt.

4. Schloß nach einem der vorangehenden Ansprüche, dadurch gekennzeichnet, daß das Halteelement (26) in der Ausnehmung (27) angeordnet ist und das gesamte Halteelement der Achse des Zylinders (19) näher ist als ein radialer äußerer Abschnitt der Halteeinrichtungen.

5. Schloß nach einem der vorangehenden Ansprüche, dadurch gekennzeichnet, daß das Halteelement (26) langgestreckte Form aufweist und sein eines Ende in Bezug auf den Bolzen (16) fest verankert ist, während sein anderes Ende mit den Halteeinrichtungen (23) auf dem Zylinder in Eingriff bringbar ist, wobei dieses Ende des Halteelementes auf die Rotationsachse des Zylinders zu und von ihr weg bewegbar ist.

6. Schloß nach Anspruch 5, dadurch gekennzeichnet, daß das Halteelement (26) eine Blattfeder ist.

7. Schloß nach einem der vorangehenden Ansprüche, dadurch gekennzeichnet, daß der Bolzen (16) einen Kragenabschnitt (24) aufweist, der den Zylinder (19) umfängt und mit Ausnehmungen versehen ist, um Endabschnitte von Nocken (35) aufzunehmen, welche bei Abwesenheit des Schlüssels vom Zylinder abstehen, wobei das Halteelement (26) an dem Hülsenabschnitt des Bolzens befestigt ist.

8. Schloß nach einem der vorangehenden Ansprüche, dadurch gekennzeichnet, daß auf dem Zylinder (19) ein Schlüsselnachweiselement (31) montiert ist, das sich relativ zum Zylinder in den schlüsselaufnehmenden Schlitz hinein bezeihungsweise aus ihm heraus bewegt, und daß ein Anschlag (32) auf dem Bolzen (16) montiert ist, um sich in Bezug auf den Bolzen in Richtung auf den schlüsselaufnehmenden Schlitz und von ihm weg um ein Schragächse hin- und herzubewegen, wobei die Anordnung derart ist, daß bei Abwesenheit des Schlüsselnachweiselementes (31) im schlüsselaufnehmenden Schlitz dieses radial vom Zylinder (19) in den Weg des Anschlages (32) auf dem Bolzen hineinragt, um die Bewegung des Bolzens aus der Offenstellung in die Schließstellung so lange zu verhindern bis der Schlüssel abgezogen ist und das Schlüsselnachweiselement (31) sich in den schlüsselaufnehmenden Schlitz bewegen kann, wobei der Anschlag (32) auf eine Bewegung mit dem Bolzen zwischen der Schließ- und der Offenstellung beschränkt ist und relativ zum Bolzen in einer vom schlüsselaufnehmenden Schlitz wegführenden Richtung bewegbar ist, wobei weiterhin vorgesehen ist, daß in allen Stellungen des Bolzens (16) die Schwenkachse des Anschlages (32) in der selben Richtung einen Abstand von einer Stirnfläche des Schlüsselnachweiselementes (31) aufweist, welches mit dem Anschlag zusammenwirkt, wenn das Schlüsselnachweiselement die Bewegung des Bolzens aus der Offenstellung verhindert.

9. Schloß nach Anspruch 8, dadurch gekennzeichnet, daß eine Feder (34) zum Drücken des Anschlages (32) in Richtung des schlüsselaufnehmenden Schlitzes vorgesehen ist und daß Einrichtungen (13) bei Offenstellung des Bolzens (16) wirksam sind, um eine Bewegung des Anschlages (32) vom schlüsselaufnehmenden Schlitz weg zu verhindern und es dem Anschlag ermöglichen, bei vollständigen Einführen des Schlüssels in den schlüsselaufnehmenden Schlitz sich am Schlüsselnachweiselement (31) vorbeizubewegen, wobei der Anschlag (32) vom schlüsselaufnehmenden Schlitz hinwegbewegbar ist, sobald der Bolzen sich in seiner Schließstellung oder in einer Zwischenstellung befindet.

**Revendications**

1. Dispositif de verrouillage, comprenant un corps (13, 14), une broche (16) qui est mobile par rapport au corps entre des positions de verrouillage et de déverrouillage, la broche étant agencée de manière que, dans la position de verrouillage, elle fasse saillie du corps de manière à entrer en contact avec un élément (10) dont le mouvement doit être limité ou empêché par le dispositif de verrouillage, alors que, dans la position de déverrouillage, la broche est retirée dudit élément, le dispositif de verrouillage comprenant en outre un mécanisme de verrouillage actionné par clé et comportant un fût (19) pourvu d'une fente de réception de clé comportant une extrémité ouverte dans une face frontale (20) du fût et ce dernier pouvant tourner par rapport au corps autour d'un axe quand la clé correcte (21) se trouve dans la fente de réception de clé, un élément de retenue (26) se déplaçant avec la broche (16) entre les positions de verrouillage et de déverrouillage, le fût (19) comportant à son extrémité éloignée de sa face frontale (20) un moyen de retenue (23) pouvant entrer en contact avec ledit élément de retenue (26) afin de maintenir la broche temporairement dans sa position de déverrouillage, caractérisé en ce que le moyen de retenue (23) définit un évidement (27) dans lequel l'élément de retenue (26) pénètre quand la broche (16) se déplace vers sa position de verrouillage.

2. Dispositif de verrouillage selon la revendication 1, caractérisé en ce que la surface de délimitation de l'évidement (27) et l'élément de retenue (26) sont agencés pour coopérer de manière que l'élément de retenue (26) soit expulsé hors de l'évidement quand le fût (19) est tourné autour de l'axe de façon à éloigner la broche de sa position de verrouillage.

3. Dispositif de verrouillage selon la revendication 2, caractérisé en ce que l'évidement (27) débouche dans une face périphérique du moyen de retenue (23) et en ce que la surface de délimitation de l'évidement s'étend à partir de la face périphérique et suivant un angle aigu par rapport à un rayon du fût.

4. Dispositif de verrouillage selon l'une quelconque des revendications 1 à 3, caractérisé en ce que, lorsque l'élément de retenue (26) est disposé dans l'évidement (27), la totalité de l'élément de retenue est plus rapprochée de l'axe du fût (19) qu'une partie radialement extérieure du moyen de retenue.

5. Dispositif de verrouillage selon l'une quelconque des revendications 1 à 4, caractérisé en ce que l'élément de retenue (26) est un élément allongé comportant une extrémité ancrée rigidement par rapport à la broche (16) et une autre extrémité pouvant entrer en contact avec ledit moyen de retenue (23) prévu sur le fût, ladite autre extrémité de l'élément de retenue étant mobile de façon à se rapprocher et s'éloigner de l'axe de rotation du fût.

6. Dispositif de verrouillage selon la revendication 5, caractérisé en ce que l'élément de retenue (26) est une lame élastique.

7. Dispositif de verrouillage selon l'une quelconque des revendications 1 à 6, caractérisé en ce que la broche (16) comporte une partie formant manchon (24) qui entoure le fût (19) et qui est pourvue d'évidements destinés à recevoir des parties extrêmes de taquets (35) qui font saillie du fût quand la clé est absente, et en ce que l'élément de retenue (26) est fixé sur la partie formant manchon de la broche.

8. Dispositif de verrouillage selon l'une quelconque des revendications 1 à 7, caractérisé en ce qu'il est prévu un élément de détection de clé (31) monté dans la broche (19) de façon à se déplacer par rapport à celle-ci pour pénétrer dans et sortir de la fente de réception de clé, ainsi qu'une butée (32) montée sur la broche (16) de façon à basculer par rapport à la broche pour se rapprocher et s'écarter de la fente de réception de clé autour d'un axe de basculement, l'agencement étant tel que, lorsque l'élément de détection de clé (31) est sorti de la fente de réception de clé, il fasse saillie radialement du fût (19) pour pénétrer dans le trajet de la butée (32) de la broche afin d'empêcher un mouvement de la broche de la position de déverrouillage dans la position de verrouillage jusqu'à ce que le clé soit retirée et que l'élément de détection de clé (31) soit autorisé à pénétrer dans la fente de réception de clé, la butée (32) étant empêchée de se déplacer avec la broche entre les positions de verrouillage et de déverrouillage et étant mobile par rapport à la broche dans une direction l'éloignant de la fente de réception de clé, le dispositif étant en outre caractérisé en ce que, dans toutes les positions de la broche (16), l'axe de basculement de la butée (32) est espacé, dans la même direction générale, d'une face de l'élément de détection de clé (31) qui est sollicitée par la butée quand l'élément de détection de clé empêche le mouvement de la broche à partir de la position de déverrouillage.

9. Dispositif de verrouillage selon la revendication 8, caractérisé en ce qu'il comporte un ressort (34) poussant la butée (32) en direction de la fente de réception de clé, ainsi qu'un moyen (13) agissant, lorsque la broche (16) se trouve dans la position de déverrouillage, pour empêcher efficacement un mouvement de la butée (32) à partir de la fente de réception de clé suffisamment pour permettre à la butée de se déplacer au delà de l'élément de détection de clé (31) pendant que la clé est complètement insérée dans la fente de réception de clé, la butée (32) pouvant être écartée de la fente de réception de clé quand la broche se trouve dans la position de verrouillage et quand la broche se trouve dans une position intermédiaire.

**0 003 994**

FIG.1.

FIG.2.

FIG.4.

FIG.3.

0 003 994

FIG. 5.